# EUROPÄISCHE PATENTSCHRIFT

(11) **EP 0 600 287 B1**
(45) Veröffentlichungstag und Bekanntmachung des Hinweises auf die Patenterteilung: **04.02.1998**
(21) Anmeldenummer: 93118381.8
(22) Anmeldetag: 12.11.1993
(51) Int. Cl.: C08B 11/12, D06P 1/50

(54) **Carboxymethylcellulose sowie deren Verwendung im Textildruck**
Carboxymethyl cellulose and its use in textile printing
Carboxyméthylcellulose et son application à l'impression des textiles

(30) Priorität: 25.11.1992 DE 4239553
(43) Veröffentlichungstag der Anmeldung: 08.06.1994
(73) Patentinhaber: WOLFF WALSRODE AKTIENGESELLSCHAFT, D-29699 Walsrode (DE)
(72) Erfinder: Kniewske, Reinhard, Dr., D-29683 Fallingbostel (DE); Kiesewetter, René, Dr., D-29614 Soltau-Ahlften (DE); Reinhardt, Eugen, D-29664 Walsrode (DE); Szablikowski, Klaus, Dr., D-29664 Walsrode (DE)
(74) Vertreter: Braun, Rolf, Dr.

(56) Entgegenhaltungen:
- DE-A- 3 208 430
- FR-A- 1 346 293
- PATENT ABSTRACTS OF JAPAN vol. 5, no. 28 (C-44)(700) 20. Februar 1981 & JP-A-55 152 701 (ADACHI KORIYOU KK.)
- DATABASE WPI Week 8450, Derwent Publications Ltd., London, GB; AN 84-309181 & JP-A-59 192 786 (SANYO KOKUSAKU PULP) 1. November 1984

## Beschreibung

Die vorliegende Erfindung betrifft Carboxymethylcellulose (CMC) mit einem niederen Substitutionsgrad, ein Verfahren zu deren Herstellung sowie deren Verwendung im Textildruck.

Für den Reaktivdruck können zur Zeit nur solche Natriumcarboxymethylcellulosen als alleinige Verdickungsmittel und Rheologieverbesserer eingesetzt werden, die einen Substitutionsgrad von 2 oder höher haben. Der Grund, warum niedriger veretherte CMC nicht eingesetzt werden kann, liegt in einer nach dem Drucken auftretenden Griffverhärtung des Textilgewebes aufgrund von Reaktionen der CMC mit dem Farbstoff über verbliebene OH-Gruppen.

Die Ursache, daß eine CMC mit einem Substitutionsgrad <2 noch mit dem Reaktivfarbstoff reagieren kann, ist in der Struktur der CMC und den Substitutionsorten der Carboxymethylgruppen innerhalb einer Anhydroglukoseeinheit begründet. Im Vergleich zu Carboxymethylcellulose reagiert Alginat, desen C₆-Position eine Carboxyfunktion darstellt und damit einen "Substitutionsgrad" an Carboxylfunktionen von 1 besitzt, im allgemeinen nicht mit Reaktivfarbstoffen.

Entsprechend dem Stand der Technik sind also die Nachteile einer Griffverhärtung beim Reaktivdruck durch den Einsatz von CMC als Verdickungsmittel erst oberhalb eines Substitutionsgrades von 2,2 überwunden (vgl. DE-PS 3 208 430).

Die Herstellung einer CMC mit DS ≥2,2 ist aber kostenintensive Erstens nimmt mit zunehmender Substitutionshöhe die Reagenzausbeute ab, zweitens führt das bei der Reaktion entstehende Salz zu niedrigen Viskositätsstufen oder es muß aufwendig von der CMC abgetrennt werden.

Die technische Aufgabe bestand nun darin, eine Carboxymethylcellulose zur Verfügung zu stellen, die bereits bei niedrigeren Substitutionsgraden als 2,2 keine Reaktion mit dem Reaktivfarbstoff ergibt und somit zu keiner Griffverhärtung des Substrates (Textilgewebes) führt. Eine solche CMC sollte von der Ergiebigkeit und den Eigenschaften beim Drucken vergleichbar mit Alginat sein.

Überraschenderweise wurde gefunden, daß Natriumcarboxymethylcellulose mit Substitutionsgraden zwischen 1,3 und 2,2, insbesondere zwischen 1,5 und 2,1, die Nachteile des Standes der Technik überwindet, wenn die CMC folgendermaßen hergestellt wird und folgende Merkmale aufweist:
1. Herstellung einer CMC nach einen Slurry-Verfahren zu einem Substitutionsgrad von ca. 0,9 bis ca. 1,2 unter stöchiometrischen Bedingungen.
2. Mahlung der so erhaltenen CMC, gegebenenfalls nach Reinigung und Trocknung zu einer Sieblinie von 100 % ≤ 2,0 mm.
3. Weiterveretherung der unter 1 und 2 genannten CMC in einem weiteren Veretherungsprozeß (z.B. Semidry- oder Slurry-Prozeß) zu einer CMC mit einem Gesamtsubstitutionsgrad von 1,3 bis 2,2, insbesondere von 1,5 bis 2,1.
4. Trocknung der nach den Punkten 1 bis 3 erhaltenen CMC mit oder ohne vorherige vollständige oder teilweise Abtrennung der Reaktionsnebenprodukte. Anschließend Konfektionierung in üblicher und bekannter Weise.

Es wurde gefunden, daß eine nach den Punkten 1 bis 4 hergestellte CMC im Textildruck mit Reaktivfarbstoffen zu keiner Griffverhärtung des Substrates führt. Eine solche CMC ist als Alternative zu Alginatverdickungsmitteln einsetzbar. Der Vorteil einer nach den Punkten 1 bis 4 hergestellten CMC ist in einem minimalen Reagenzaufwand zu sehen, einem hohen Aktivgehalt durch Reinigung nach der ersten Reaktionsstufe und damit verbunden einer hohen Viskositätsergiebigkeit.

Die Herstellung von Natriumcarboxymethylcellulose nach einem Zweistufenverfahren ist an sich bekannt. In US-Patent 4 426 518 ist z.B. die Herstellung von hochveretherter CMC nach einem zweistufigen-Slurry-Prozeß erwähnt, wobei allerdings in der ersten Stufe eine unterstöchiometrische Menge an Natronlauge zum Einsatz kommen muß. In dem Dokument ist beschrieben (Spalte 3, Zeilen 40 bis 45), daß der beanspruchte Prozeß besonders vorteilhaft in der Herstellung einer CMC mit einem DS im Bereich von 0,8 bis 2,0 ist und generell zu gleichen Produkten führt wie beim herkömmlichen Prozeß mit stöchiometrischen Mengen an Alkali.

Die nach der ersten Stufe erhaltenen CMCs werden als gereinigte und getrocknete, jedoch ungemahlene Produkte für die nachfolgende Veretherung eingesetzt.

Die nach zweistufiger Slurry-Veretherung hergestellten CMCs (siehe z.B. Beispiel 6 in US 4 426 518) zeigen im Textildruck nicht die gleichen vorteilhaften Eigenschaften wie die nach dem erfindungsgemäßen Verfahren hergestellten CMCs (vgl. z.B. CMC1, CMC2, CMC4 der Beispiele, sh. Tabelle 3, Druck Nr. 2, 3, 5, 6). Sie ergeben trotz gleichen Substitutionsgrades eine Griffverhärtung des bedruckten Substrates.

In der DE-OS 33 03 153 wird ein Verfahren zur Herstellung von Carboxyalkylcellulosen mit einem durchschnittlichen Substitutionsgrad von >1 beschrieben. Als Verfahren wird ein Slurry-Verfahren in einem organischen Lösungsmittel in bis zu drei Stufen beschrieben, jedoch ohne Aufarbeitung zwischen den Stufen.

In DE-PS 32 08 430 wird eine Textildruckpaste beansprucht, die dadurch gekennzeichnet ist, daß sie ein Alkalimetallsalz von Carboxymethylcellulose mit einem mittleren Substitutionsgrad von wenigstens 2,2 enthält. In diesem Patent ist erwähnt, daß niedrigsubstituierte CMCs bis DS 1,5 nicht für den Reaktivdruck eingesetzt werden können, da sie noch immer Reaktivität gegenüber Reaktivfarbstoffen aufweisen aufgrund teilweise unveretherter, primärer OH-Gruppen in der C₆-Position. Nur CMCs mit einem Substitutionsgrad von 1,7 bis 1,85 werden in einigen Fällen in Verbindung mit Natriumalginat verwendet, wobei jedoch immer noch ein Problem hinsichtlich des Griffes der bedruckten Stoffe verbleibt (sh. hierzu auch anwendungstechnische Beurteilung in Tabelle 3 der Beispiele; Druckpaste Nr. 6, Stammverdickung F). Zusammenfassend wurde in dem Patent erwähnt, daß die durch ein- oder zweistufige Verfahren hergestellten Carboxymethylcellulosen Natriumalginat beim Druck mit Reaktivfarbstoffen nicht ersetzen können, so lange der Substitutionsgrad nicht oberhalb von 2,2 liegt. Daher wurde in DE-PS 32 08 430 eine CMC mit einem Substitutionsgrad von wenigstens 2,2 beansprucht, die in der Lage ist, Natriumalginat in Reaktivfarbstoffpasten zu ersetzen und darüber hinaus in der Auswaschbarkeit Natriumalginat überlegen ist.

In dem vorliegenden erfindungsgemäßen Verfahren wird eine CMC mit einem deutlich niedrigeren Substitutionsgrad, nämlich im Bereich von 1,3 bis 2,2, vorzugsweise von 1,5 bis 2,1, vorgestellt, die die negativen Eigenschaften einer üblichen CMC in diesem Substitutionsgradbereich nicht aufweist.

Das nach der ersten und gegebenenfalls zweiten Stufe vorzunehmende Zerkleinerungsverfahren wird als Trocken- oder als Naßvermahlung durchgeführt. Als Mühlentypen können Walzen-, Kugel-, Schlag- und Schleuder-, Strahl- oder Schwingmühlen o.a. verwendet werden. Um die Auflösbarkeit des Verdickungsmittels beim Bedrucken des Textilmaterials zu verbessern, empfiehlt es sich, die Produkte vor ihrem Einsatz zu mahlen und auf eine Sieblinie von 100 % ≤2,0 mm einzustellen.

Die erfindungsgemäß hergestellten Carboxymethylcellulosen werden als Druckpasten-Grundlagen im Textildruck verwendet. Sie werden dabei vorzugsweise allein eingesetzt, können aber auch im Gemisch mit anderen im Textildruck üblichen natürlichen oder halbsynthetischen Druckpasten-Grundlagen, wie z.B. Natriumalginat, Stärke, modifizierten Stärken, Guar, Johannesbrotkernmehl, Gummi arabicum, Kristallgummi, Traganth-Gummi, Tamarinde und/oder Celluloseethern, insbesondere Carboxymethylcelluloseethern bekannter Gütequalität aber auch vollsynthetischen Verdickungsmitteln wie Polyacrylaten, eingesetzt werden, wobei die Menge der erfindungsgemäß beanspruchten CMC im Gemisch nicht unter 10 % liegen sollte, da sonst der erfindungsgemäße Vorteil nicht mehr zum Tragen kommt.

Die erfindungsgemäß hergestellten Carboxymethylcellulosen werden im Textildruck als Druckpasten-Grundlage eingesetzt. Als Textilmaterialien können synthetische Fasern, Naturfasern, Mischgewebe oder Celluloseregenerat verwendet werden. Als Farbstoffe werden z.B. Oxidations-, Schwefel-, Entwicklungs-, Woll-, Chromierungs-, Direkt-, Säure-, Dispersions-, Naphthol-, Küpen-, Metallkomplexfarbstoffe, Pigmente oder Handelsprodukte aus einer Mischung einer Kupplungskomponente von Entwicklungsfarbstoffen und einer Diazoaminoverbindung, insbesondere jedoch Reaktivfarbstoffe verwendet.

Die nach dem erfindungsgemäßen Verfahren hergestellten, nach dem weiter unten beschriebenen Meßverfahren charakterisierten, gel- und faserfreien Cellulosederivate zeichnen sich durch ausgezeichnete Lösungsqualitäten aus und können als Dispergier-, Binde- oder Verdickungsmittel bzw. als Rheologieverbesserer in der Textilindustrie, insbesondere im Textildruck, eingesetzt werden. Die Natriumcarboxymethylcellulosen weisen ausgezeichnete Qualitäten auf und sind sowohl als gereinigte, teilgereinigte wie auch ungereinigte (technische) Produkte einsetzbar. Die Produkte sind gelkörper- und faserfrei in Wasser löslich, besitzen Viskositäten der gereinigten Substanz von 10 bis 50.000 mPa.s, vorzugsweise 100 bis 30.000 mPa.s (gemessen in 2 gew.-%iger wäßriger Lösung bei einem Schergefälle von D = 2,5 s⁻¹ und 20°C [Rotations-Viskosimeter]) und weisen bereits nach der ersten Stufe Transmissionswerte von mehr als 95 %, insbesondere von mehr als 96 % auf (gemessen an einer 2 gew.-%igen wäßrigen Lösung in einer Küvette mit einer optischen Weglänge von 10 mm mit Licht der Wellenlänge λ = 550 nm). Der wasserlösliche Anteil liegt nach der zweiten Stufe bei ≥ 98%, insbesondere ≥ 99,9%.

Der Gegenstand der Erfindung soll anhand der folgenden Beispiele näher erläutert werden. Als Carboxymethylcellulosen wurden die folgenden mit CMC 1 bis CMC 5 bezeichneten Proben hergestellt und anwendungstechnisch ausgetestet.

Um fehlerhafte Drucke, die durch Verstopfung der Schablonen, Gaze oder Rotationsschablonen entstehen könnten, zu vermeiden, wurden die in den nachfolgenden Beispielen erwähnten Carboxymethylcellulosen vor ihrer anwendungstechnischen Ausprüfung im Textildruck auf ihre Transmission bzw. ihren wasserlöslichen Anteil untersucht. Die Transmissionswerte der in den Beispielen erwähnten CMCs 1 bis 5 lagen bei >96 % (Hitachi-Spektralphotometer, Modell 101, Hitachi Ltd., Tokio/Japan); Glasküvette mit 10 mm optischer Weglänge (λ = 550 nm; 2 gew.-%ige Lösung in dest. Wasser). Der wasserlösliche Anteil lag bei >99,9 %.

### Herstellung der CMC 1

27,5 kg eines feingemahlenen Linterzellstoffes (Trockengehalt: 94,6 %) werden in einem thermostatisierbaren Reaktor unter Stickstoffatmosphäre in 604,5 l Isopropanol und 45,5 l Wasser suspendiert. Nach Zugabe von 16,3 kg Natriumhydroxid-Plätzchen wird 80 min bei 25°C alkalisiert. Anschließend werden 19,3 kg einer 80 %igen Monochloressigsäure hinzugegeben. Innerhalb von 15 min wird auf 75°C erwärmt und die Reaktionstemperatur von 75°C 120 min lang gehalten. In 45 min wird auf 30°C abgekühlt und nachfolgend werden 5,4 kg Natriumhydroxid-Plätzchen eingegeben. Nach 30minütigem Alkalisieren bei 28°C werden 6,4 kg einer 80 %igen Monochloressigsäure aufgedüst. Innerhalb von 20 min wird auf 75°C erwärmt und weitere 120 min bei 75°C verethert. Der Ansatz wird abgekühlt und über eine Zentrifuge abgetrennt. Die CMC wird in 500 l 80 %igem Methanol aufgeschlämmt, in einer Zentrifuge mit 900 l Methanol salzfrei gewaschen, bei 70°C getrocknet und anschließend mit einer Schneidmühle gemahlen. Die Carboxymethylcellulose besitzt einen Substitutionsgrad durch Carboxymethylgruppen von 1,07 (67 % Ausbeute). Die Viskosität der 2 gew.-%igen Lösung (Rotationsviskosimeter, Typ RV 100, System M 500, Meßeinrichtung MV nach DIN 53 019, Schergeschwindigkeit D = 2,5 s⁻¹ (T = 20°C)) beträgt 20.600 mPa.s.

Für die nachfolgende Umsetzung werden 14,9 kg der oben hergestellten CMC zusammen mit 25 l Isopropanol in einen Pflugscharmischer unter Stickstoffatmosphäre eingegeben. Unter Rühren werden 11,5 kg einer 50 %igen Lauge aufgedüst. Anschließend wird 30 min bei ca. 25°C alkalisiert. 8,2 kg einer 80 %igen Monochloressigsäure werden aufgedüst. Innerhalb von 40 min wird auf 75°C erwärmt und diese Temperatur 120 min lang beibehalten. Der Ansatz wird 24 h bei 70°C getrocknet. Die Carboxymethylcellulose (CMC 1) besitzt einen Substitutionsgrad durch Carboxymethylgruppen von 1,78. Die charakteristischen Daten der CMC gehen aus Tabelle 1 hervor.

### Herstellung der CMC 2

Die Herstellung der CMC 2 erfolgt analog zu derjenigen von CMC 1. Nach der ersten Stufe besitzt die Carboxymethylcellulose einen Substitutionsgrad durch Carboxymethylgruppen von 1,17 (73 % Ausbeute). Die Viskosität der 2 gew.-%igen Lösung beträgt 38.200 mPa.s. Nach der zweiten Stufe besitzt die CMC einen Substitutionsgrad durch Carboxymethylgruppen von 1,65. Die Kenndaten gehen aus Tabelle 1 hervor.

### Herstellung der CMC 3

641 Teile eines käuflich erhältlichen CMC-Pulvers (Walocel® CRT 40 000 PA) werden in einem Laborkneter mit 524 Teilen Natriummonochloressigsäure (80 %ig) 30 min lang intensivst vermischt. Nach Zugabe von 475 Teilen einer 40 %igen Natronlauge wird 80 min lang bei 25 bis 30°C alkalisiert. Innerhalb von 20 min wird auf 61°C aufgeheizt. Nach einer Reaktionszeit von 120 min wird abgekühlt, das Produkt bei 55°C 24 h im Trockenschrank getrocknet und anschließend gemahlen. Der Substitutionsgrad durch Carboxymethylgruppen liegt bei 1,73. Die Kenndaten der CMC gehen aus Tabelle 1 hervor.

### Herstellung der CMC 4 (Vergleichsbeispiel)

127 Teile eines feingemahlenen, gebleichten, veredelten Linterzellstoffes werden in einem thermostatisierbaren Reaktor mit geeignetem Rührer unter Stickstoffatmosphäre in 2.193 Teilen Isopropanol dispergiert und 15 min gerührt. Dann werden 88 Teile Natriumhydroxid-Plätzchen in 210 Teilen Wasser zugegeben und 80 min bei 25 bis 30°C alkalisiert. Nach Zugabe von 130 Teilen einer 80 %igen wäßrigen Monochloressigsäure wird innerhalb von 30 min auf 70°C erwärmt und die Reaktionstemperatur von 70°C 120 min lang gehalten. In der Hitze werden sodann nochmals 88 Teile Natriumhydroxid-Plätzchen und nachfolgend kontinuierlich über einen Zeitraum von 20 min 130 Teile Monochloressigsäure (80 %ig) zugegeben. Die Veretherung wird anschließend bei 70°C während weiterer 120 min vorgenommen. Das Produkt wird filtriert und mit 70 %igem Methanol gewaschen, an der Luft getrocknet und gemahlen. Die so erhaltene Carboxymethylcellulose weist einen Substitutionsgrad durch Carboxymethylgruppen von 1,73 auf. Die Kenndaten sind Tabelle 1 zu entnehmen.

### Herstellung der CMC 5 (Vergleichsbeispiel)

205 Teile eines käuflich erhältlichen CMC-Pulvers (Walocel® CRT 30 000 PS) werden in einen Laborkneter eingegeben, mit 139 Teilen Natriummonochloressigsäure (80 %ig) 30 min vermischt und nach Aufdüsen von 126 Teilen einer 40 %igen Natronlauge 80 min lang bei 25 bei 30°C alkalisiert. Innerhalb von 20 min wird die Temperatur auf 60°C erhöht. Nach einer Reaktionszeit von 120 min wird abgekühlt, daß Produkt bei 55°C getrocknet und gemahlen. Der Substitutionsgrad durch Carboxymethylgruppen liegt bei 1,19. Die Kenndaten gehen aus Tabelle 1 hervor.

**Tabelle 1**

| Kenndaten der verwendeten CMCs | | | | | | | |
|---|---|---|---|---|---|---|---|
| Bezeichnung | NaCl (%) | Natriumglykolat (%) | Viskosität | | DS³⁾ | | Sieblinie nach erster Stufe (mm) |
| | | | (%) (CMC) | (mPa.s) | erste Stufe | zweite Stufe | |
| CMC 1 | 16,2 | 9,9 | 4 | 21.500¹⁾ | 1,07 | 1,78 | 18 % > 0,315 |
| | | | | | | | 82 % < 0,315 |
| | | | | | | | 78 % < 0,250 |
| | | | | | | | 50 % < 0,063 |
| CMC 2 | 15,4 | 10,2 | 4 | 13.600¹⁾ | 1,17 | 1,65 | 18 % > 0,315 |
| | | | | | | | 82 % < 0,315 |
| | | | | | | | 78 % < 0,250 |
| | | | | | | | 50 % < 0,063 |
| CMC 3 | 21,9 | 17,4 | 9 | 33.000²⁾ | 0,95 | 1,73 | 100 % < 0,315 |
| | | | | | | | 95 % < 0,250 |
| | | | | | | | 40 % < 0,063 |
| CMC 4 | 0,05 | 0,03 | 2 | 19.000¹⁾ | - | 1,73 | - |
| CMC 5 | 13,6 | 11,9 | 5 | 31.000²⁾ | 0,95 | 1,19 | 100 % < 0,315 |
| | | | | | | | 95 % < 0,250 |
| | | | | | | | 40 % < 0,063 |

| | | | | | | | |
|---|---|---|---|---|---|---|---|
| 1) Viskosität, x %ige Lösung, aufgenommen mit einem Rotationsviskosimeter (Haake), Typ RV 100, System M 500, Meßeinrichtung MV, nach DIN 53 019, bei einer Schergeschwindigkeit von D = 2,5 s⁻¹ (T = 20°C) | | | | | | | |
| 2) Viskosität, x %ige Lösung (Brookfield RVF, Spindel 4, 20 UpM) | | | | | | | |
| 3) durchschnittlicher Substitutionsgrad durch Carboxymethylgruppen, siehe hierzu: K. Balser, M. Iseringhausen in Ullmanns Encyclopädie der technischen Chemie, 4. Auflage, Band 9, Verlag Chemie, Weinheim, 1983, S. 192 bis 212, DS-Bestimmung nach ASTM D-1439-83 a/Methode B | | | | | | | |

In den nachfolgend aufgeführten Beispielen ist die Wirkung verschiedener erfindungsgemäß eingesetzter Carboxymethylcellulosen als Verdickungsmittel im Textildruck, einem handelsüblichen Natriumalginat (Lamitex M 5, Firma Protan/Norwegen) gegenübergestellt. Verglichen wurde Natriumalginat als 6 %ige Lösung mit CMCs unterschiedlicher Konzentration aber gleicher Viskosität der wäßrigen Lösung von ca. 30 000 mPa.s (Brookfield RVF, Spindel 4, 20 UpM).

Die Zusammensetzung der mit den Carboxymethylcellulosen hergestellten Stammverdickungen ist in Tabelle 2 aufgeführt. Die Druckpasten erhält man durch Abmischung definierter Mengen der jeweiligen Stammverdickung (90 Teile) mit definierten Teilen des Farbstoffes (10 Teile) und destilliertem Wasser. Als Farbstoff wird ein handelsüblicher Reaktivfarbstoff (Cibacron Türkis PG 3® (40 %)) eingesetzt.

**Tabelle 2**

| Zusammensetzung der Stammverdickungen | | | | | | | | |
|---|---|---|---|---|---|---|---|---|
| Verdickungsbestandteile | | Stammverdickungen¹⁾ | | | | | | |
| | | A | B | C | D | E | F | G |
| Lamitex M 5²⁾ | 6 %ig | 550 | - | - | - | - | 275 | - |
| CMC 1 | 5,5 %ig | - | 500 | - | - | - | - | - |
| CMC 2 | 6 %ig | - | - | 500 | - | - | - | - |
| CMC 3 | 9 %ig | - | - | - | 500 | - | - | - |
| CMC 4 | 2,5 %ig | - | - | - | - | 700 | 350 | - |
| CMC 5 | 5 %ig | - | - | - | - | - | - | 500 |
| Lyoprint AP® ³⁾ | | 3 | 3 | 3 | 3 | 3 | 3 | 3 |
| Lyoprint RG® ⁴⁾ | | 10 | 10 | 10 | 10 | 10 | 10 | 10 |
| Harnstoff | | 180 | 180 | 180 | 180 | 180 | 180 | 180 |
| NaHCO₃ | | 25 | 25 | 25 | 25 | 25 | 25 | 25 |
| Permutit-Wasser | | 232 | 282 | 282 | 282 | 82 | 157 | 282 |
| Gesamtmenge | | 1.000 g | | | | | | |

| | | | | | | | | |
|---|---|---|---|---|---|---|---|---|
| 1) Angaben in Gew.-Teilen | | | | | | | | |
| 2) Lamitex M5 enthält 5 g/kg Na-Hexametaphosphat (Calgon® T) und 5 g/kg Formalin (37 %ig) | | | | | | | | |
| 3) Entschäumer; Fa. BASF/Ludwigshafen | | | | | | | | |
| 4) Oxidationsmittel; Fa. BASF/Ludwigshafen | | | | | | | | |

Mit den Fertigdruckpasten werden Druckversuche mit Cotton-Schussatin (mercerisiert, gebleicht) als Substrat vorgenommen. Das Textilgut wird ca. 10 min bei 102 bis 105°C getrocknet (Sattdampf-Fixierung (Mathis-Trockner) und durch Trockenhitze (Heißluft) fixiert (1 min bei 200°C, Mathis-Trockner). Der Auswaschprozeß erfolgt in drei Stufen:
a) gründliches, kaltes Spülen,
b) Behandlung in der Nähe der Kochtemperatur (10 min),
c) kaltes Spülen.

Für die Beurteilung von Stärke, Penetration, Nuance, Griff und Egalität wird eine 64-T-Schablone (Rechtecke) und eine Rakel mit einem Durchmesser von 8 mm eingesetzt (Magnetstufe 3, Geschwindigkeitsstufe 3) (Zimmer-Flachfilmdruck). Für die Beurteilung der Standschärfe wird eine 68-T-Testschablone und eine Rakel mit einem Durchmesser von 8 mm verwendet (Magnetstufe 3, Geschwindigkeitsstufe 3). Die Ergebnisse der Druckvorgänge gehen aus Tabelle 3 hervor.

**Tabelle 3**

| Druckausfall/Vergleich mit Lamitex M 5 (Nr. 1), Sattdampf-Fixierung | | | | | | | |
|---|---|---|---|---|---|---|---|
| Druck bzw. Druckpaste | Stammverdickung | Stärke¹ | Nuance ¹⁾ | Penetration | Egalität | Griff | Standschärfe |
| 1 | A | 100 % ²⁾ | - ²⁾ | - ²⁾ | - ²⁾ | - ²⁾ | - ²⁾ |
| 2 | B | 110 % | praktisch gleich | etwas-deutlich mehr | praktisch gleich | praktisch gleich | etwas - deut lich besser |
| 3 | C | 112 % | praktisch gleich | Spur-etwas mehr | praktisch gleich | praktisch gleich | deutlich besser |
| 4 | D | 105 % | praktisch gleich | Spur - etwas mehr | praktisch gleich | praktisch gleich | etwas - deut lich besser |
| 5 | E | praktisch gleich | praktisch gleich | deutlich mehr | praktisch gleich | etwas -deutlich schlechter | deutlich -erheblich besser |
| 6 | F | praktisch gleich | praktisch gleich | Spur - etwas mehr | praktisch gleich | etwas schlechter | etwas - deut lich besser |
| 7 | G | 130 % | etwas unreiner | Spur mehr | deutlich schlechter | deutlicherheblich schlechter | deutlich schlechter |

| | | | | | | | |
|---|---|---|---|---|---|---|---|
| 1) farbmetrische Messung | | | | | | | |
| 2) Vergleich | | | | | | | |

Die in den Tabellen verwendeten Fachausdrücke sind dem Cellulose- bzw. Textildruckfachmann bekannt und bedürfen keiner weiteren Erklärung. Verwiesen sei in diesem Zusammenhang auf die Kapitel "Textildruck" und "Textilfärberei" in Ullmanns Encyclopädie der technischen Chemie, Band 22, Seite 565 ff und Seite 635 ff (Verlag Chemie, Weinheim, 1982).

Aus der nachfolgend aufgeführten Wertetabelle ist die Überlegenheit der im Textildruck eingesetzten, erfindungsgemäß beanspruchten CMC klar erkennbar.

**Tabelle 4**

| Exemplarischer Vergleich zwischen herkömmlichen, im Textildruck eingesetzten Verdickungsmitteln und dem erfindungsgemäß beanspruchten Celluloseether | | | |
|---|---|---|---|
| Austestung hinsichtlich | Alginat (Fa.Protan) | CMC 1 und 2 (Erfindung) | CMC 4 (Vergl.-Bsp.) |
| 1. Konservierung (Formaldehyd) | unbedingt erforderlich | nicht notwendig | nicht notwendig |
| 2. Scherstabilität | gut | gut | gut |
| 3. Egalität beim Druck | gut | gut | gut |
| 4. Standschärfe beim Druck | gut | sehr gut | gut |
| 5. Griff des bedruckten Substrates (Auswaschbarkeit) | gut | gut | schlecht ¹⁾ |
| 6. Penetration des Substrates | gut | gut | gut |
| 7. Nuance | gut | gut | gut |
| 8. Reproduzierbarkeit | schlecht | gut | gut |

| | | | |
|---|---|---|---|
| ¹⁾ erreicht auch als Abmischung mit Alginat den Stand der Technik nicht | | | |

## Patentansprüche

1. Carboxymethylcellulose (CMC) mit einem Substitutionsgrad von 1,3 bis 2,2, hergestellt nach einem zweistufigen Verfahren,
dadurch gekennzeichnet,
dass die CMC in einer ersten Stufe nach einem Slurry-Verfahren bis zu einem Substitutionsgrad von 0,9 bis 1,2 verethert wird, mit Mahlung nach der ersten Stufe, wobei das nach der ersten Stufe gemahlene Pulver eine Sieblinie von 100 % ≤ 2,0 mm aufweist,
und die so erhaltene CMC im zweiten Schritt weiter auf einen Gesamtsubstitutionsgrad von 1,3 bis 2,2 verethert wird.

2. Carboxymethylcellulsoe gemäß Anspruch 1, dadurch gekennzeichnet, daß die Carboxymethylcellulosen Transmissionswerte von mehr als 95 %, (gemessen an einer 2 Gew.-%igen wäßrigen Losung in einer Küvette mit einer optischen Weglänge von 10 mm Licht der Wellenlänge λ = 550 nm) und einen wasserlöslichen Anteil von ≥ 98 %, besitzt.

3. Verwendung von Carboxymethylcellulose gemäß einem der Ansprüche 1 oder 2 als Verdickungsmittel bzw. Rheologieverbesserer im Textildruck.

4. Verwendung gemäß Anspruch 3, dadurch gekennzeichnet, daß die CMC im Gemisch mit Natriumalginat, Stärke, modifizierten Stärken, Guar, Johannisbrotkernmehl, Gummi arabicum, Kristallgummi, Traganth-Gummi, Tamarinde und/oder Celluloseethern, eingesetzt wird.

5. Verwendung gemäß Ansprüchen 3 oder 4, dadurch gekennzeichnet, daß als Textilmaterialien synthetische Fasern, Naturfasern, Mischgewebe oder Celluloseregenerat verwendet werden.

6. Verwendung gemäß einem der Ansprüche 3 bis 5, dadurch gekennzeichnet, daß als Farbstoffe Oxidations-, Schwefel-, Entwicklungs-, Woll-Chromierungs-, Direkt-, Säure-, Dispersions-, Naphthol-, Küpen-, Metallkomplex-, Reaktivfarbstoffe, Pigmente oder Produkte aus einer Mischung einer Kupplungskomponente von Entwicklungsfarbstoffen und einer Diazoaminoverbindung verwendet werden.

## Claims

1. Carboxymethylcellulose (CMC) having a degree of substitution of 1.3 to 2.2, produced using a two-stage process,
characterised in that,
in a first stage, the CMC is etherified to a degree of substitution of 0.9 to 1.2 using a slurry process, with grinding after the first stage, wherein the powder ground after the first stage has a grading curve of 100% ≤ 2.0 mm,
and, in the second stage, the CMC obtained in this manner is further etherified to a total degree of substitution of 1.3 to 2.2.

2. Carboxymethylcellulose according to claim 1, characterised in that the carboxymethylcelluloses have transmission values of greater than 95% (measured on a 2 wt.% aqueous solution in a cuvette having an optical pathlength of 10 mm using light of a wavelength of λ = 550 nm) and a water-soluble fraction of ≥ 98%.

3. Use of carboxymethylcellulose according to one of claims 1 or 2, as a thickener or flow improver in textile printing.

4. Use according to claim 3, characterised in that the CMC is used as a mixture with sodium alginate, starch, modified starches, guar gum, locust bean gum, gum arabic, dextrin, tragacanth gum, tamarind and/or cellulose ethers.

5. Use according to claims 3 or 4, characterized in that the textile materials used are synthetic fibres, natural fibres, mixed fabrics or regenerated cellulose.

6. Use according to one of claims 3 to 5, characterised in that the dyes used are oxidation dyes, sulphur dyes, development dyes, wool chrome dyes, direct dyes, acid dyes, dispersion dyes, naphthol dyes, vat dyes, metal complex dyes, reactive dyes, pigments or products arising from a mixture of a coupling component of development dyes and a diazoamino compound.

## Revendications

1. Carboxyméthylcellulose (CMC) à un degré de substitution de 1,3 à 2,2, préparée par un procédé à deux stades opératoires,
caractérisée en ce que, dans un premier stade opératoire, on éthérifie la CMC par une opération en bouillie jusqu'à un degré de substitution de 0,9 à 1,2, on broie après le premier stade opératoire, jusqu'à une limite de tamisage de 100 % ≤ 2,0 mm et, dans un deuxième stade opératoire, on éthérifie à nouveau la CMC jusqu'à un degré de substitution global de 1,3 à 2,2.

2. Carboxyméthylcellulose selon la revendication 1, caractérisée en ce qu'elle a un coeffient de transmission supérieur à 95 % (mesure sur une solution aqueuse à 2 % en poids dans une cuvette à trajet optique de 10 mm avec de la lumière de longueur d'onde λ=550 nm), et une fraction soluble dans l'eau ≥ 98 %.

3. Utilisation de la carboxyméthylcellulose selon une des revendications 1 ou 2 en tant qu'agent épaississant ou améliorant des propriétés rhéologiques à l'impression textile.

4. Utilisation selon la revendication 3, caractérisée en ce que la CMC est mise en oeuvre en mélange avec de l'alginate de sodium, de l'amidon, des amidons modifiés, de la gomme guar, de la gomme de caroube, de la gomme arabique, de la gomme cristal, de la gomme adragante, du tamarin et/ou des éthers cellulosiques.

5. Utilisation selon la revendication 3 ou 4, caractérisée en ce que la matière textile consiste en fibres synthétiques, fibres naturelles, tissus mélangés ou cellulose régénérée.

6. Utilisation selon une des revendications 3 à 5, caractérisée en ce que les colorants utilisés sont des colorants par oxydation, des colorants ou soufre, des colorants à développement, des colorants à chromer pour laine, des colorants directs, des colorants acides, des colorants dispersés, des colorants de naphtol, des colorants de cuve, des colorants complexes métalliques, des colorants réactifs, des pigments ou des produits consistant en un mélange d'un copulant de colorant à développement et un dérivé diazoaminé.
